# EUROPÄISCHE PATENTANMELDUNG

(11) **EP 2 759 347 A1**
(43) Veröffentlichungstag der Anmeldung: **30.07.2014**
(21) Anmeldenummer: 14153129.3
(22) Anmeldetag: 29.01.2014
(51) Int. Cl.: B05D 7/00, C09D 5/08, C09D 7/12

(54) **Lackaufbau und dessen Verwendung als Fahrzeuglack, Schiffslack, Bautenschutz- oder Industrielack**

(30) Priorität: 29.01.2013 DE 102013001498
(71) Anmelder: Nano-X GmbH, 66130 Saarbrücken (DE)
(72) Erfinder: SEPEUR, Stefan, 66787 Wadgassen (DE); LARYEA, Nora, 66113 Saarbrücken (DE); GROß, Frank, 66663 Merzig (DE); GOEDICKE, Stefan, 66540 Neunkirchen (DE)
(74) Vertreter: Teipel, Stephan

(57) **Zusammenfassung**

Die vorliegende Erfindung betrifft einen Lackaufbau, ein Verfahren zur Herstellung dieses Lackaufbaus sowie die Verwendung dieses Lackaufbaus als Fahrzeuglack, Schiffslack, Bautenschutz- oder Industrielack.

## Beschreibung

Die vorliegende Erfindung betrifft einen Lackaufbau, ein Verfahren zur Herstellung dieses Lackaufbaus sowie die Verwendung dieses Lackaufbaus als Fahrzeuglack, Schiffslack, Bautenschutz- oder Industrielack.

Derzeit bestehen Fahrzeuglacke im Allgemeinen aus sechs Schichten. Zunächst wird hierzu das zu lackierende Stahlblech verzinkt, wobei die Verzinkung im Allgemeinen im Stahlwerk durch galvanische Prozesse oder durch Schmelztauchverfahren erfolgt. Alternativ werden unbehandelte Bleche oder Bleche mit einer AlSi-Schicht verwendet. Aluminiumbauteile müssen dabei aufgrund von Kontaktkorrosion durch aufwendige bauliche Mittel vom Stahl getrennt werden.

Um einen einheitlichen Haftgrund für die anschließende kathodische Tauchlackierung zu schaffen, wird die im ersten Schritt erhaltene Zinkschicht mit einer Zinkphosphatschicht versehen. Dieser Vorgang erfolgt in wässrigen Tauchbädern und ist umwelttechnisch bedenklich.

Auf die Zinkphosphatschicht wird anschließend in einem Tauchbad durch Anlegen von Strom eine kathodische Tauchlackierungsschicht aufgebracht. Als Bindemittel werden meist Epoxidharze, insbesondere umwelttechnisch bedenkliche Bisphenol A-basierte Harze verwendet. Die kathodische Tauchlackierungsschicht stellt einen passiven Korrosionsschutz zur Verfügung. Sie wird im Allgemeinen bei etwa 180°C für 20 bis 30 Minuten eingebrannt.

Auf die kathodische Tauchlackierungsschicht wird anschließend eine Füllerschicht aufgebracht, die als Harz Polyester, Melamine und teilweise auch aromatische Epoxidharze enthält. Als Füllstoffe dienen Titandioxid und plättchenförmige Pigmente, die insbesondere die Steinschlagfestigkeit und die Haftung unterstützen sollen. Ruß dient zum UV-Schutz für die darunterliegende kathodische Tauchlackierungsschicht. Hochwertige Füller enthalten zur besseren Vernetzung noch einen Anteil von freien Isocyanaten. Die Einbrenntemperaturen liegen bei ca. 140-150°C für 30 Minuten.

Der Füller wird anschließend mit einem farbgebenden Wasserbasislack basierend auf Acrylat- oder Polyurethandispersionen in Kombination mit Melaminharzen gefüllt mit Farb- und Effektpigmenten, dem sogenannten Basecoat, versehen. Auch hier sind zur besseren Vernetzung des Gesamtaufbaus oftmals noch Isocyanatgruppen zudosiert. Der Wasserbasislack wird bei ca. 80°C für 10 Minuten angetrocknet.

Abschließend wird als sechste und letzte Schicht ein Klarlack aufgetragen, der den gesamten Aufbau gegen mechanische, chemische und umweltbedingte Belastungen schützen soll. Entsprechende Klarlacke sind normalerweise 2K PU basiert, wobei als Härterkomponente Isocyanate eingesetzt werden.

Die vorstehend beschriebene Fahrzeuglackierung ist aufgrund der Vielzahl der aufzutragenden Schichten aufwendig und zudem teuer. Außerdem weisen die eingesetzten Beschichtungsmittel zum Teil umwelttechnisch bedenkliche und sogar giftige Bestandteile auf. Schließlich erfordern einige der Schichten aufgrund ihrer Bestandteile relativ hohe Einbrenntemperaturen und lange Einbrennzeiten, wodurch das Lackieren von Fahrzeugen und deren Teilen wiederum zeitaufwendig und teuer wird.

Es besteht somit ein starkes Bedürfnis nach alternativen Lackaufbauten, die einen einfacheren Aufbau als herkömmliche Fahrzeuglackierungen aufweisen, bei denen die Beschichtungsmittel möglichst keine oder nur wenige umwelttechnisch bedenkliche Bestandteile enthalten, die bei niedrigerer Temperatur gehärtet werden können und die trotzdem in Bezug auf beispielsweise Witterungs- und Kratzbeständigkeit zu herkömmlichen Fahrzeuglackierungen gleichwertig oder sogar höherwertig sind.

Ebenso besteht auch im Bereich von Schiffslacken, Bautenschutz- oder Industrielacken das Bedürfnis den regulären Aufbau Metallsubstrat-Grundierung-Zwischenschicht(en)-Deckschicht durch einen einfacheren, gleichzeitig aber auch gut haftenden, vorzugsweise korrosions-, abriebs- und witterungsstabileren Aufbau zu ersetzen.

Das US 4,499,150 offenbart einen herkömmlichen Lackaufbau, der neben einer Farbschicht eine Klarlackschicht umfasst. Die Deckschicht wird durch Härten eines Bindemittels erhalten, das durch Reaktion ethylenisch ungesättigter Monomere mit copolymerisierbaren ethylenisch ungesättigten Alkoxysilanmonomeren erhalten wird.

Das US 5,281,468 beschreibt einen Lackaufbau mit einer Klarlackdeckschicht, die ein Polymer enthält, das durch Copolymerisation ethylenisch ungesättigter Silanmonomere erhältlich ist.

Die US-Patentanmeldung Nr. 2007/0172680 beschreibt einen Korrosionsschutzlack, der ein Silanbindemittel aus epoxymodifzierten Alkoxysilanen enthält.

Das US 6,657,001 beschreibt ein Silanbindemittel, das nach dem herkömmlichen Sol-Gel-Verfahren hergestellt wird.

Die DE 10 2012 005 806 offenbart ein Verfahren zur Herstellung einer Korrosionsschutzbeschichtung.

Die WO 2008/034409 beschreibt ein Silanbeschichtungsmaterial.

Die DE 10 2004 034 645 beschreibt ein Korroionsschutz-Beschichtungsmittel.

Es wurde nun überraschend gefunden, dass die vorstehend genannten und andere Aufgaben durch einen zwei- oder dreischichtigen Lackaufbau gelöst werden, sofern dieser Lackaufbau eine metallpartikelhaltige Korrosionsschutzunterschicht und eine Deckschicht umfasst, die durch Aushärten eines bindemittelhaltigen Beschichtungsmittels erhältlich ist, wobei das Bindemittel der Deckschicht mindestens ein Silan (A) mit mindestens zwei - Si(OR)₃₋ₙ-Gruppen enthält, worin n 0 oder 1 ist und R unabhängig voneinander eine C₁₋₅-Alkylgruppe darstellt, und das Silan (A) durch Reaktion eines organischen Moleküls mit zwei oder mehr reaktiven funktionellen Gruppen, ausgewählt aus Amino-, Epoxy-, Mercaptan-, Carbonsäure-, Anhydrid-, Oxim-, Isocyanato- und Thioisocyanatogruppen, mit einem oder mehreren Silanen (B) mit einer organischen Seitenkette, die eine oder mehrere funktionelle Gruppen enthält, die mit den reaktiven funktionellen Gruppen des organischen Moleküls reagieren können, erhältlich ist.

Die metallpartikelhaltige Korrosionsschutzunterschicht ersetzt in dem erfindungsgemäßen Lackaufbau die herkömmlich notwendige Verzinkung und Phosphatierung der Zinkschicht. Eine entsprechende metallpartikelhaltige Korrosionsschutzunterschicht kann durch herkömmliche Auftragungsmethoden, wie Sprühen oder Tauchen, direkt auf beispielsweise eine Stahloberfläche aufgebracht werden, so dass energieaufwendige galvanische Prozesse sowie umwelttechnisch bedenkliche Phosphatierungsschritte entfallen. Zudem hat die metallpartikelhaltige Korrosionsschutzunterschicht den Vorteil, dass sie hervorragende Korrosionsschutzeigenschaften aufweist, so dass eine zusätzliche kathodische Tauchlackierung entfallen kann. Schließlich kann auch auf den Füller verzichtet werden, da die metallpartikelhaltige Korrosionsschutzunterschicht selbst ausreichend eben ist.

Der erfindungsgemäße Lackaufbau umfasst demnach vorzugsweise keine herkömmliche Korrosionsschutzschicht und insbesondere keine Schicht, die durch Verzinkung des Substrats und Phosphatierung dieser Zinkschicht erhalten wurde. Ferner umfasst der erfindungsgemäße Lackaufbau vorzugsweise keine Schicht, die durch kathodische Tauchlackierung erhalten wurde.

Ferner wurde überraschend gefunden, dass vermutlich aufgrund ihres speziellen Bindemittels die Deckschicht nicht nur besonders gut auf der Korrosionsschutzunterschicht oder der gegebenenfalls zusätzlich vorhandenen Zwischenschicht haftet, sondern diese Deckschicht in Kombination mit der metallpartikelhaltigen Korrosionsschutzunterschicht dem Lackaufbau insgesamt hervorragende Eigenschaften in Bezug auf Steinschlagfestigkeit, Bewitterungsbeständigkeit und Kratzfestigkeit verleiht. Außerdem kann die erfindungsgemäß eingesetzte Deckschicht bei niedrigen Temperaturen von beispielsweise weniger als 100°C eingebrannt werden, so dass der erfindungsgemäße Lackaufbau insgesamt mit wenigen Schritten schnell, energieeffizient und preiswert hergestellt werden kann. Auf umwelttechnisch bedenkliche oder gar giftige Substanzen kann zudem weitgehend oder sogar vollständig verzichtet werden.

Der erfindungsgemäße Lackaufbau ist dem Aufbau einer herkömmlichen Fahrzeuglackierung in Bezug auf seine Gebrauchseigenschaften zumindest ebenbürtig und teilweise sogar überlegen. Ohne an eine Theorie gebunden sein zu wollen, wird angenommen, dass dies darauf zurückzuführen ist, dass der erfindungsgemäße Lackaufbau weniger Schichten und damit weniger Grenzflächen aufweist als der herkömmliche Aufbau und es somit zu weniger Problemen bei der Haftung der Schichten aufeinander kommen kann. Besonders vorteilhaft ist der erfindungsgemäße Lackaufbau, wenn alle Schichten ein Siliciumoxid basiertes Bindemittel enthalten. Dies ermöglicht, dass die einzelnen Schichten untereinander kovalente chemische Bindungen eingehen und so beispielsweise zu einer verbesserten Steinschlagbeständigkeit beitragen. Im Gegensatz dazu sind die Schichten bei einer herkömmlichen Fahrzeuglackierung nur physikalisch aneinander gebunden.

Geeignete metallpartikelhaltige Korrosionsschutzunterschichten sind im Stand der Technik bekannt und werden beispielsweise in DE 10 2009 044 043 A1, DE 10 2007 038 214 A1, DE 10 2007 038 215 A1, DE 10 2008 020 216 A1 und DE 10 2012 005 806 beschrieben. Auf den Inhalt dieser Veröffentlichungen wird daher vorliegend inhaltlich Bezug genommen.

Die metallpartikelhaltige Korrosionsschutzunterschicht übt eine Korrosionsschutzwirkung auf das Substrat aus, auf das der erfindungsgemäße Lackaufbau aufgetragen wird. Die Korrosionsschutzwirkung erfolgt durch die in der Korrosionsschutzunterschicht enthaltenen Metallpartikel. Diese stellen einen kathodischen Korrosionsschutz zur Verfügung. Geeignete Metalle sind beispielsweise Zink, Aluminium, Zinn, Eisen, Mangan, Magnesium, Kupfer, Nickel, Chrom, Molybdän und Mischungen oder Legierungen hieraus. Geeignete Metalllegierungspartikel sind beispielsweise Zink-Aluminium-Partikel, Zink-MagnesiumPartikel, Zink-Nickel-Partikel und Chrom-Nickel-Eisen-Partikel. Insbesondere bieten Zink und Zink-Aluminium-Legierungen einen hoch wirksamen kathodischen Korrosionsschutz.

Die Metallpartikel können in Form von Pulvern (z.B. Glimmer MICA) oder sogenannten Flakes eingesetzt werden, wobei plättchenförmige Flakes die Schichtbildung beim Auftragen des Beschichtungsmittels auf ein Substrat unterstützen.

Die Metallpartikel können einzeln oder in beliebiger Mischung von zwei oder mehreren Metallpartikeln eingesetzt werden.

Darüber hinaus kann es vorteilhaft sein, wenn die Korrosionsschutzunterschicht zusätzlich zu den Metallpartikeln organische oder anorganische leitende Substanzen wie beispielsweise Eisenphosphid, Ruß, Graphit, Indiumzinnoxid (ITO), Antimonzinnoxid (ATO), fluordotiertes Zinnoxid (FTO) oder Nanoröhrchen enthält.

Die Größe der eingesetzten Metallpartikel ist nicht besonders eingeschränkt und kann beispielsweise im Bereich von 0,1-50 µm, vorzugsweise 1-20 µm liegen. Auch die Menge der eingesetzten Metallpartikel ist nicht besonders eingeschränkt. Sie hängt von den eingesetzten Metallpartikeln und der gewünschten Korrosionsschutzwirkung ab und kann beispielsweise im Bereich von 1-90 Gew.-%, vorzugsweise 20-80 Gew.-%, besonders bevorzugt 50-70 Gew.-% Metallpartikel bezogen auf das Trockengewicht der Korrosionsschutzunterschicht liegen, wobei unter Trockengewicht das Gewicht der Bestandteile des Beschichtungsmittels ohne Lösungsmittel verstanden wird.

In einer Ausführungsform kann die metallpartikelhaltige Korrosionsschutzunterschicht ausschließlich aus den Metallpartikeln und einem Metalloxid bestehen, wobei das Metalloxid aus der Gruppe, bestehend aus Titanoxid, Zirkoniumoxid, Aluminiumoxid, Zinkoxid und Zinnoxid, bestehen kann. Bei dieser Metall-Keramik Hybridtechnologie legt sich das Metalloxid in dünner Schicht um die einzelnen Metallpartikel und bindet durch Kondensationsprozesse die Partikel aneinander. Entsprechende Beschichtungsmittel sind beispielsweise in der DE 10 2009 044 043 A1 beschrieben.

Zusätzlich oder alternativ zu dem Metalloxid kann die metallpartikelhaltige Korrosionsschutzunterschicht ein Bindemittel enthalten. Vorzugsweise ist dieses Bindemittel durch Aushärten eines Beschichtungsmittels erhältlich, das epoxymodifiztierte Siliciumoxidpartikel enthält, wie sie beispielsweise in der DE 10 2012 005 806 beschrieben sind. Geeignete epoxymodifizierte Siliciumoxidpartikel sind beispielsweise als wässrige Systeme im Handel erhältlich. Besonders vorteilhaft bei diesen Systemen ist, dass sie durch Wahl geeigneter Härtungskatalysatoren bei Raumtemperatur bzw. bei sehr niedrigen Temperaturen im Bereich von 80°C bis 130°C härtbar sind. Aufgrund der pH-Neutralität lassen sie sich zudem gut mit Zink- und Aluminiumpigmenten füllen. Auf diese Weise lassen sich gasungsarme, wässrige Metalllamellenbeschichtungen als Korrosionsschutzunterschicht des erfindungsgemäßen Lackaufbaus herstellen.

Epoxymodifizierte Siliciumoxidpartikel lassen sich durch Kondensation von epoxymodifiziertem Alkoxysilan erhalten. Entsprechende Kondensationsreaktionen sind als Sol-Gel-Verfahren bekannt. In diesem Verfahren werden hydrolisierbare Alkoxygruppen der eingesetzten Alkoxysilane abgespalten, wobei die Silane zu Siliciumoxidsolen kondensieren. Die in den eingesetzten Alkoxysilanen enthaltenen Epoxymodifizierungen bleiben von dieser Kondensationsreaktion ausgeschlossen, so dass epoxymodifizierte Siliciumoxidsole entstehen. Die Alkoxyreste werden bei der Kondensation abgespalten und werden als Alkohol in die Reaktionslösung freigesetzt. In dieser können sie entweder verbleiben oder sie können hieraus vor der Weiterverarbeitung entfernt werden.

Das epoxymodifizierte Siliciumoxid kann entweder ausschließlich aus den genannten epoxymodifizierten Alkoxysilanen hergestellt werden oder aus einer Mischung von epoxymodifizierten Alkoxysilanen mit anderen, nicht epoxymodifizierten Silanen, insbesondere Alkoxysilanen, wie beispielsweise Phenylethyltrimethoxysilan, Phenylethyltriethoxysilan, Phenylmethyldiethoxysilan, Phenyldimethylethoxysilan, 3-Aminopropyltriethoxysilan (APTES), Aminoethylaminopropylsilan, 3-Aminopropyltrimethoxysilan (APTMS), N-(2-Aminoethyl)-3-aminopropyltrimethoxysilan (DIAMO), N-(2-Aminoethyl)-3-aminopropylmethyldimethoxysilan, N-Cyclohexyl-3-aminopropyltrimethoxysilan, Benzylaminoethylaminopropyltrimethoxysilan, Vinylbenzylaminoethylaminopropyltrimethoxysilan, Vinyltrimethoxysilan, Vinyltriethoxysilan (VTEOS), Vinyldimethoxymethylsilan, Vinyl(tris)methoxyethoxy)silan, Vinylmethoxymethylsilan, Vinyltris(2-methoxyethoxy)silan, Vinyltriacetoxysilan, Mercaptopropyltrimethoxysilan, Bis-Triethoxysilylpropyldisulfidosilan, Bis-Triethoxysilylpropyltetrasulfidosilan, N-Cyclohexylaminomethyldiethoxysilan, N-Cyclohexylaminomethyltriethoxysilan, N-Phenylaminomethyltrimethoxysilan, N-Phenylaminopropyltrimethoxysilan (Methacryloxymethyl)methyldimethoxysilan, Methacryloxymethyltrimethoxysilan, (Methacryloxymethyl)methyldiethoxysilan, Methacryloxymethyltriethoxysilan, 3-Methacryloxypropyltrimethoxysilan, 3-Methacryloxypropyltriacetoxysilan, 3-Trimethoxysilylmethyl-O-methylcarbamat, N-Dimethoxy-(methyl)silylmethyl-O-methyl-carbamat, 3-(Triethoxysilyl)propylbernsteinsäure-anhydrid, Aminopropyl-Methyl-diethoxysilan, Aminopropyl-Methyl-dimethoxysilan, 1,2-Bis(Triethoxysilyl)ethan, Bis-3-(triethoxypropylsilyl-propyl)amin, Bis-3-(trimethoxypropylsilyl-propyl)amin, Butylaminopropyltrimethoxysilan, N-Ethyl-3-aminoisobutyltrimethoxysilane, Ethyltriacetosilan (ETA), 3-Isocyanatopropyltriethoxysilan (ICTES), Methyltriacetoxysilan, Mercaptopropyltriethoxysilan, Mercaptopropyltrimethoxysilan, N-Methylaminopropyltrimethoxysilan, 3-(2-(2-Aminoethylamino)ethylamino)propyltriethoxysilan (TRIAMO), Tris(3-trimethoxysilylpropyl-isocyanurat), Octadecylaminodimethyltrimethoxysilylpropylammoniumchlorid, 3-Methacryloxypropylmethyldimethoxysilan, 3-Methacryloxypropylmethyldiethoxysilan, 3-Methacryloxypropyltriethoxysilan, 3-Acryloxypropyltrimethoxysilan, N-(2-Aminoethyl)-3-aminopropyltriethoxysilan, 3-Triethoxysilyl-N-(1,3-dimethyl-butyliden)propylamin, N-Phenyl-3-aminopropyltrimethoxysilan, 3-Ureidopropyltriethoxysilan, 3-Chloropropyltrimethoxysilan, 3-Mercaptopropylmethyldimethoxysilan, 3-Mercaptopropyltrimethoxysilan, Bis(triethoxysilylpropyl)tetrasulfid, Tetramethoxysilan, Methyltrimethoxysilan, Dimethyldimethoxysilan, Dimethyldiethoxysilan, Tetrakis(2-butoxyethyl)orthosilicat, Hexyltrimethoxysilan, Hexyltriethoxysilan, Decyltrimethoxysilan, Decyltriethoxysilan Ethyltrimethoxysilan, Ethyltriethoxysilan, Propyltrimethoxysilan, Propyltriethoxysilan, Ethyltrimethoxysilan, n-Octyltriethoxysilan, n-Octyltrimethoxysilan, Propyltrimethoxysilan, Propyltriethoxysilan, n-Butyltrimethoxysilan, n-Butyltriethoxysilan , t-Butyltrimethoxysilan, t-Butyltriethoxysilan, Phenyltrimethoxysilan, Phenyltriethoxysilan, Isobutyltriethoxysilan (IBTEO), Isobutyltrimethoxysilan (IBTEO), Tetraethoxysilan (TEOS), Methyltriethoxysilan (MTEOS), Dimethyldimethoxysilan, Dimethyldiethoxysilan (DMDES), Trimethylethoxysilan, Trimethylmethoxysilan, Isooctyltrimethoxysilan, Isooctyltriethoxysilan, Hexadecyltrimethoxysilan, (Octadecyl)methyldimethoxysilan, (Cyclohexyl)methyldimethoxysilan, Dicyclopentyldimethoxysilan, (Octadecyl)methyldiethoxysilan, (Cyclohexyl)methyldiethoxysilan, Dicyclopentyldiethoxysilan und Hexadecyltriethoxysilan.

Darüber hinaus können entweder bereits während der Kondensation der Alkoxysilane oder später zusätzlich vorkondensiertes Siliciumoxid beispielsweise in Form von Kieselsol oder Kieselsäure zugesetzt werden.

Um ein gutes Aushärten der Schicht zu erreichen, sollte das eingesetzte epoxymodifizierte Siliciumoxid in dem Beschichtungsmittel 0,5 - 12 Mol, bevorzugt 1 - 10 Mol, besonders bevorzugt 1-5 Mol Epoxygruppen pro kg epoxymodifiziertes Siliciumoxid enthalten.

Ferner kann das Beschichtungsmittel das epoxymodifizierte Siliciumoxid in Form von Partikeln einer Größe im Bereich von 0,1 nm bis 10 µm, vorzugsweise im Bereich von 1 nm bis 100 nm, besonders bevorzugt im Bereich von 5 nm bis 100 nm, wie beispielsweise etwa 10 nm oder etwa 50 nm enthalten. Die Größe der Partikel wird dabei nach ISO 22412 mittels dynamischer Lichtstreuung (specialized anaylsis methods for multimodal size distributions and zeta potential/electrophoretic mobilitiy distributions) bestimmt.

Als epoxymodifizierte Alkoxysilane eignen sich beispielsweise Verbindungen der Formel

R¹R²ₘSi(OR)₃₋ₘ

worin m 0,1 oder 2, vorzugsweise 0 oder 1 ist, R¹ eine epoxyfunktionelle Gruppe ist,
R² Wasserstoff oder ein beliebiger organischer Rest wie beispielsweise C₁₋₅-Alkyl, Aryl (insbesondere Phenyl), Amino-C₁₋₅-alkyl, Cyclohexyl oder Vinyl ist und
RO C₁₋₅-Alkoxy, vorzugsweise Methoxy oder Ethoxy, besonders bevorzugt Ethoxy ist.

Bei der epoxyfunktionellen Gruppe R¹ kann es sich beispielsweise um eine Epoxyalkylgruppe handeln, deren Alkylgruppe mit einem oder mehreren Heteroatomen, wie Sauerstoff oder Stickstoff, unterbrochen sein kann. Die Alkylgruppe kann zudem mit einem oder mehreren Substituenten, wie beispielsweise Hydroxy, Amino, Carboxy oder Aryl, substituiert sein. Die Alkylgruppe kann geradkettig, verzweigt und/oder ringförmig vorliegen. Bevorzugte Alkylgruppen enthalten 1-20, insbesondere 1-10 Kohlenstoffatome außerhalb des Oxiranrings. Besonders bevorzugt wird die Alkylgruppe von einem Sauerstoffatom unterbrochen. Eine besonders bevorzugte epoxyfunktionelle Gruppe ist die Glycidoxypropylgruppe.

Als epoxymodifizierte Alkoxysilane eignen sich beispielsweise 3-Glycidoxypropyltrimethoxysilan, 3-Glycidoxypropyltriethoxysilan, 3,4-Epoxybutyltrimethoxysilan, 3,4-Epoxybutyltriethoxysilan, 2-(3,4-Epoxycyclohexyl)ethyltrimethoxysilan, 2-(3,4-Epoxycyclohexyl)ethyltriethoxysilan, 3-Glycidoxypropyldimethylethoxysilan, 3-Glycidoxypropyldimethylmethoxysilan, 3-Glycidoxypropylmethyldiethoxysilan und 3-Glycidoxypropylmethyldimethoxysilan.

Die Deckschicht des erfindungsgemäßen Lackaufbaus ist durch Aushärten eines bindemittelhaltigen Beschichtungsmittels erhältlich, wobei das Bindemittel mindestens ein Silan (A) mit mindestens zwei -Si(OR)₃₋ₙ-Gruppen enthält. Entsprechende Silane sind durch Reaktion von organischen Molekülen, die zwei oder mehr reaktive funktionelle Gruppen aufweisen, mit einem oder mehreren Silanen (B) mit organischen Seitenketten, die eine oder mehrere korrespondierende funktionelle Gruppen enthalten, erhältlich. Entsprechende Silane (A) und deren Herstellung sind beispielsweise in DE 10 2008 014 717 A1, DE 10 2006 044 310 A1 und DE 10 2007 020 404 A1 beschrieben. Die Inhalte dieser Dokumente werden daher in die vorliegende Anmeldung einbezogen.

Die organischen funktionellen Gruppen der eingesetzten organischen Moleküle sind Amino-, Hydroxy-, Epoxy-, Mercaptan-, Carbonsäure-, Anhydrid-, Oxim-, Isocyanato- und Thioisocyanatgruppen. Als korrespondierende funktionelle Gruppen eignen sich insbesondere Hydroxy und Isocyanat, Isocyanat und Amino, Harnstoff und Isocyanat, Carbonsäure und Isocyanat, Anhydrid und Isocyanat, Epoxy und Amin, Isocyanat und Epoxy, Hydroxy und Epoxy. Bei den Silanen (A) handelt es sich somit um das Produkt einer Additionsreaktion zwischen dem organischen Molekül und dem Silan (B), wobei in dem erhaltenen Silan (A) die mindestens zwei -Si(OR)₃₋ₙ-Gruppen beispielsweise mittels Urethan-, Keto-, Ether- oder Estergruppen verknüpft sind.

Als organische Moleküle können insbesondere Diole und Polyole mit Alkoxysilanen (B) umgesetzt werden, wobei insbesondere folgende Alkoxysilane als Silane (B) in Frage kommen:

3-Aminopropyltriethoxysilan, Aminoethylaminopropyltrimethoxysilan, Aminoethylaminopropyltrimethoxysilan, 3-Aminopropyltrimethoxysilan, N-(2-Aminoethyl)-3-aminopropyltrimethoxysilan, N-(2-Aminoethyl)-3-aminopropylmethyldimethoxysilan, N-(2-Aminoethyl)-3-aminopropylmethyldimethoxysilan, N-Cyclohexyl-3-aminopropyl-trimethoxysilan, Benzylaminoethylaminopropyltrimethoxysilan, Vinylbenzylamino-ethylaminopropyl-trimethoxysilan, Vinyltrimethoxysilan, Vinyltriethoxysilan, Vinyldiemthoxymethylsilan, Vinyltris(methoxyethoxy)silan, Vinyltris(2-methoxyethoxy)silan, Vinyltriacetoxysilan, Chloropropyltrimethoxysilan, 3-Glycidoxypropyltrimethoxysilan, 3-Glycidoxypropyltriethoxysilan, Glycidoxypropyl-methyldiethoxysilan, Mercaptopropyltrimethoxysilan, Bis-Triethoxysilylpropyldisulfidosilan, Bis-Triethoxysilyl-propyldisulfidosilan, Bis-Triethoxysilylpropyltetrasulfidosilan, N-Cyclohexylaminomethylmethyldiethoxysilan, N-Cyclohexylaminomethyltriethoxysilan, N-Phenylaminomethyltrimethoxysilan, (Methacryloxymethyl)methyldimethoxysilan, Methacryloxymethyltrimethoxysilan, (Methacryloxymethyl)methyldiethoxysilan, Methacryloxymethyltriethoxysilan, 3-Methacryloxypropyltrimethoxysilan, 3-Methacryloxypropyltriethoxysilan, 3-Methacryolxypropyltriacetoxysilan, (Isocyanatomethyl)methyldimethoxysilan, 3-Isocyanatopropyltrimethoxysilan, 3-Isocyanatopropyltriethoxysilan, 3-Trimethoxysilylmethyl-O-methylcarbamat, N-Dimethoxy-(methyl)silylmethyl-O-methyl-carbamat, 3-(Trimethoxysilyl)propylbernsteinsäure-anhydrid, 3-(Triethoxysilyl)propylbernsteinsäure-anhydrid, Dicyclopentyldimethoxysilan, 3-(trimethoxysilyl)-propyldimethyloctadecylammoniumchlorid, Tris(3-Trimethoxysilyl)-isocyanurat, 3-Triethoxysilylpropyl)-t-butylcarbamat, Triethoxysilyl-propylethylcarbamat, 3-Thiocyanatopropyltriethoxysilan, Bis[3-(Triethoxysilyl)propyl]-tetrasulfid, Bis[3-(Triethoxysilyl)propyl]-disulfid, 3-Mercaptopropylmethyldimethoxysilan und Beta-(3,4-Epoxycyclohexyl)ethyltriethoxysilan.

Die vorstehend beschriebene und für die Herstellung des Bindemittels der Deckschicht eingesetzte Additionsreaktion ist zu dem eingangs beschriebenen Sol-Gel-Verfahren invers. Im Sol-Gel-Verfahren werden die Silane durch Abspaltung der Alkoxygruppen miteinander vernetzt (d.h. anorganisch vorvernetzt), wobei ein Siliciumoxidpolymergerüst erhalten wird, das mit den organischen Resten substituitert ist. Diese Vernetzung zu Siliciumoxideinheiten unter Abspaltung der Alkoxygruppen wird vorliegend als anorganische Vernetzung bezeichnet. Im Gegensatz dazu wird das Bindemittel der Deckschicht zunächst über die organischen funktionellen Gruppen des eingesetzten Silans (B) vernetzt, so dass ein größeres organisches Molekül entsteht, das mindestens zwei Alkoxysilanreste (-Si(OR)₃₋ₙ-Gruppen) enthält und vorliegend als Silan (A) bezeichnet wird. Diese organisch vorvernetzten Partikel werden dann erst beim Härten der Lackschicht anorganisch vernetzt, d.h. die Moleküle werden unter Abspaltung der Alkoxygruppen und Bildung von -Si-O-Si-Brücken vernetzt.

In einer bevorzugten Ausführungsform der vorliegenden Erfindung ist das Silan (A) des Bindemittels der Deckschicht vor dem Aushärten des Beschichtungsmittels maximal zu 5 %, bevorzugt maximal zu 1 % und besonders bevorzugt nicht anorganisch vorvernetzt, wobei sich die Prozentangaben auf die Menge der vorhandene Siliciumatome in Mol beziehen. Diese anorganische Vorvernetzung kann dabei durch die Zugabe von Wasser bei der Herstellung und Lagerung des Bindemittels gezielt gesteuert werden. Geringe Mengen von Wasser, wie beispielsweise Luftfeuchtigkeit, führen jedoch noch nicht zu der unerwünschten anorganischen Vorvernetzung.

Darüber hinaus ist es vorteilhaft, wenn das Silan (A) des Bindemittels der Deckschicht außer den OR-Gruppen in den -Si(OR)₃₋ₙ-Gruppen keine reaktiven organischen funktionellen Gruppen enthält. Dies wird dadurch erreicht, dass in dem eingesetzten organischen Molekül alle funktionellen chemischen Gruppen mit Silanen (B) abgesättigt werden.

In dem Silan (A) mit mindestens zwei Si(OR)₃₋ₙ-Gruppen ist n 0 oder 1, vorzugsweise 0. R steht unabhängig voneinander für eine C₁₋₅-Alkylgruppe, vorzugsweise Methyl oder Ethyl, insbesondere Ethyl.

In einer weiteren Ausführungsform kann der erfindungsgemäße Lackaufbau zusätzlich eine Zwischenschicht umfassen, die ein Bindemittel enthält, das durch Aushärten eines Beschichtungsmittels erhältlich ist, das epoxymodifizierte Siliciumoxidpartikel enthält. In dieser Ausführungsform ist die Zwischenschicht zwischen der Korrosionsschutzunterschicht und der Deckschicht angeordnet. Vorzugsweise enthält der erfindungsgemäße Lackaufbau entweder nur die Korrosionsschutzunterschicht mit einer darüber angeordneten Deckschicht oder die Korrosionsschutzunterschicht mit der darüber angeordneten Zwischenschicht und der darauf angeordneten Deckschicht. Der erfindungsgemäße Lackaufbau weist somit vorzugsweise zwei oder drei Schichten auf.

Die epoxymodifizierten Siliciumoxidpartikel, die für die Herstellung der Zwischenschicht eingesetzt werden, sind vorzugsweise wie vorstehend für die Korrosionsschutzunterschicht beschrieben definiert. Die eingesetzten epoxymodifzierten Siliciumoxidpartikel in Korrosionsschutzunter- und Zwischenschicht können dabei gleich oder verschieden sein.

Es wird vermutet, dass die besonders vorteilhaften Eigenschaften des erfindungsgemäßen Lackaufbaus insbesondere in Bezug auf dessen Steinschlagfestigkeit auf die Verwendung von siliciumoxidhaltigen Bindemitteln in den Schichten des Aufbaus zurückzuführen sind.

Eine oder mehrere der Schichten des erfindungsgemäßen Lackaufbaus können zusätzlich weitere Bestandteile wie Füllstoffe, insbesondere Glimmer, Mica Pigmente, UV-Stabilisatoren, Effektpigmente und Farbpigmente enthalten. Vorzugsweise enthalten die Deckschicht und/oder Zwischenschicht Effekt- und/oder Farbpigmente. In einer weiteren Ausführungsform wird die Deckschicht vorzugsweise als Klarlackschicht ausgestaltet, insbesondere dann, wenn der Lackaufbau eine Zwischenschicht enthält, die selbst Effekt- und/oder Farbpigmente enthält.

Die vorliegende Erfindung betrifft darüber hinaus ein verfahren zur Herstellung des vorstehend beschriebenen Lackaufbaus, worin ein metallpartikelhaltiges Beschichtungsmittel auf ein Substrat aufgebracht und gegebenenfalls zumindest teilweise ausgehärtet wird und auf diese Schicht gegebenenfalls nach Aufbringen und gegebenenfalls Aushärten einer Zwischenschicht das Beschichtungsmittel der Deckschicht aufgebracht und gehärtet wird. Die einzelnen Beschichtungsmittel können dabei beispielsweise nasschemisch, insbesondere durch Sprühen, Tauchen, Fluten, Rollen, Streichen, Drucken, Schleudern, Rakeln oder aber auch durch Verdampfen im Vakuum auf das Substrat aufgetragen werden. Das erfindungsgemäße Verfahren umfasst vorzugsweise keinen Schritt mit dem das Substrat verzinkt wird. Außerdem umfasst das Verfahren vorzugsweise keine kathodische Tauchlackierung.

Als Substrat eignen sich beispielsweise Metall, Kunststoff, Keramik, Lack, Gewebe, Textilien, Naturstoffe, Glas, mineralische Substanzen und Verbundmaterialien, wobei Metall, insbesondere Stahl, Aluminium, Magnesium oder Mischungen davon, bevorzugt ist.

Das Aushärten der einzelnen Schichten des Lackaufbaus entweder nacheinander oder gemeinsam kann beispielsweise bei Temperaturen von Raumtemperatur bis 1200°C erfolgen, vorzugsweise von Raumtemperatur bis 250°C, besonders bevorzugt von Raumtemperatur bis 100°C. Das Härten kann thermisch, induktiv, mit Mikrowellenstrahlung oder UV-Strahlung erfolgen.

Schließlich betrifft die vorliegende Erfindung auch die Verwendung des vorstehend beschriebenen Lackaufbaus als Fahrzeuglack, Schiffslack, Bautenschutz- oder Industrielack.

Die folgenden Beispiele sollen die Erfindung näher erläutern ohne einschränkend ausgelegt zu werden.

### Beispiel 1 (Metallpartikelbeschichtung ohne Füllstoff)

120 g feines blättchenförmiges Zinkpulver (Blitz Z1041, Bendar-Lutz) sowie 15 g einer ebenfalls blättchenförmigen Aluminiumpigmentpaste (Blitz Aluminiumpaste 6050, Bendar-Lutz) wurden vorgelegt und mit 100 g Xylol übergossen. Der Ansatz wurde in einem geschlossenen Gefäß mit laufenden Rührer 2 h homogenisiert und anschließend 24h ruhen gelassen.

Zu dem Ansatz wurden unter Rühren unter einer Atmosphäre aus getrocknetem Stickstoff 120 g Tetra-n-butyl-orthotitanat gegeben, 1 h mit einem langsam laufenden Rührer homogenisiert und anschließend 12 h bei 150°C unter Rückfluss erhitzt. Dabei fand eine Oberflächenmodifizierung der Zink- und Aluminiumpartikel mit der metallorganischen Komponente statt. Nach Rückkühlung auf Raumtemperatur wurden unter Rühren unter der trockenen Stickstoffatmosphäre weitere 240 g Tetra-n-butyl-orthotitanat zugegeben und 5 h weiter gerührt.

Danach wurden unter schnellem Rühren innerhalb von 15 min 16 g Demiwasser langsam zugetropft und weitere 24 h gerührt.

### Beispiel 2 (Metallpartikelbeschichtung mit Glimmer als Füllstoff)

### Teil1:

120 g feines blättchenförmiges Zinkpulver (Blitz Z1041, Bendar-Lutz) sowie 15 g einer ebenfalls blättchenförmigen Aluminiumpigmentpaste (Blitz Aluminiumpaste 6050, Bendar-Lutz) wurden vorgelegt und mit 100 g Xylol übergossen. Der Ansatz wurde in einem geschlossenen Gefäß mit laufenden Rührer 2 h homogenisiert und anschließend 24h ruhen gelassen.

Zu dem Ansatz wurden unter Rühren unter einer Atmosphäre aus getrocknetem Stickstoff 120 g Tetra-n-butyl-orthotitanat gegeben, 1 h mit einem langsam laufenden Rührer homogenisiert und anschließend 12 h bei 150°C unter Rückfluß erhitzt. Dabei fand eine Oberflächenmodifizierung der Zink- und Aluminiumpartikel mit der metallorganischen Komponente statt. Nach Rückkühlung auf Raumtemperatur wurden unter schnellem Rühren 100 g Glimmer (Plastorit 000, Fa. Imerys Talc) eingewogen und 30 min homogenisiert. Unter der trockenen Stickstoffatmosphäre wurden weitere 240 g Tetra-n-butyl-orthotitanat zugegeben und 5 h weiter gerührt.

Danach wurden unter schnellem Rühren innerhalb von 15 min 16 g Demiwasser langsam zugetropft und weitere 24 h gerührt.

Stahlbleche wurden mit einem alkalischen Tensidreiniger (Alsar 25/7, Fa. Alsa) entfettet, klargespült und getrocknet. Anschließend wurden diese Bleche mit den in Beispiel 1 und 2 hergestellten metallpartikelhaltigen Korrosionsschutzunterschichten besprüht und 15 min bei 180°C getrocknet. Die erhaltenen Muster mit einer Trockenschichtdicke von 6-7 µm wiesen einen glatte silbrig-homogene Optik auf. Nach Abkühlen der Substrate wurde ein schwarzer Hydrofüller (BASF Coatings) aufgesprüht, 10 min ablüften gelassen und 20 min bei 165°C getrocknet. Die Trockenschichtdicke betrug ca. 30 µm. Danach erfolgte die Applikation eines schwarzen Basislacks (Bollig & Kemper), der nach 10 min ablüften bei Raumtemperatur bei 80°C 10 min getrocknet wurde. Die Trockenschichtdicke lag bei ca. 15 µm. Danach erfolgte die jeweile Applikation eines Klarlackes (Beispiele 2.1, 2.2, und 2.3) im klassischen Automobilserienaufbau.

### Beispiel 2.1 100% Klarlack Formulierung gemäß WO 2008/034409 A2 und WO 2009/115079 A1

Mit dem o.g. Aufbau (Teil 1) erfolgte die Applikation eines 2-Komponenten Klarlackes vom Typ x-protect^{®} KR 3441 (NANO-X GmbH) durch pneumatisches Sprühen mit einer Trockenschichtdicke von ca. 45 µm. Nach 10 min Ablüften bei Raumtemperatur erfolgte die Endhärtung bei 140°C für 20 min.

### Beispiel 2.2 100% Klarlack Formulierung gemäß WO 2008/034409 A2 und WO 2009/115079 A1

Folgende Formulierung wurde als Klarlack mit einer Schichtdicke von ca. 20 µm aufgetragen:
- 90,09 g: x-bond U 9074 (NANO-X GmbH)
- 9,09 g: Nacure 4054 (King Industries)

Nach Applikation der Formulierung aus Beispiel 2.2 im Flutverfahren erfolgte die Härtung bei Raumtemperatur über 24 h.

### Beispiel 2.3 1-K Klarlack

- 429,7 g: Setalux 1760 VB-64 (Nuplex Resins)
- 168,8 g: Setalux 91760 SS-53 (Nuplex Resins)
- 223,0 g: Setamin US-138 BB-70 (Nuplex Resin)
- 26,0 g: Baysilon OL-17 (2% in xylene) (Bayer)
- 5,2 g: TINUVIN 292 (BASF)
- 5,2 g: TINUVIN 384 (BASF)
- 5,2 g: Butyl diglycol
- 93,6 g: Solvesso 150 ND
- 43,3 g: Xylol
- 403 g: VP BO 90165 (SiliXan 80% Feststoffanteil in Xyol; NANO-X GmbH)
- 33 g: x-add^{®} KR 9006 (NANO-X GmbH)

Mit dem o.g. Aufbau (Teil 1) erfolgte die Applikation der Formulierung aus Beispiel 2.3 durch pneumatisches Sprühen mit einer Trockenschichtdicke von ca. 45 µm. Nach 10 min Ablüften bei Raumtemperatur erfolgt die Endhärtung bei 140°C für 20 min.

### Referenzbeispiel konventioneller Serienaufbau

Ein Stahlblech mit konventioneller KTL Lackierung (BASF Coatings) wurde unter den analogen Applikationsbedingungen, wie in Beispiel 2, ein schwarzer Hydrofüller (BASF Coatings) appliziert und getrocknet (Trockenschichtdicke ca. 30 µm). Danach erfolgt die Applikation des Basislackes (Bollig & Kemper) mit einer Trockenschichtdicke von 15 µm. Danach erfolgte die Applikation eines konventionellen 2K PUR Lackes vom Typ Pro Gloss FF 99-0140 mit einer Schichtdicke von ca. 45 µm.

Die Eigenschaften der Lackaufbauten wurden mit den folgenden Methoden getestet:

### Haftung:

Einschneidegerät nach DIN ISO EN 2409 Punkt 4 für plane und gewölbte Proben, mit weichem und hartem Untergrund, unabhängig von der Gesamtschichtdicke. Mehrschneidengeräte nach DIN ISO EN 2409 Punkt 4 f · plane Proben mit hartem Untergrund bis zu einer Gesamtschichtdicke von 250 µm. Abweichend von DIN ISO EN 2409: Klebeband Tesa 4657 mit Klebekraft von 4,0 ± 0,5N /cm(Breite).

### Kratzfestigkeit:

Die Kratzfestigkeit der Oberflächen der resultierenden Beschichtungen wurde mit Hilfe des Crockmeter-Tests (in Anlehnung an EN ISO 105-X12 mit 10 Doppelhüben und 9 N Auflagekraft unter Verwendung von 9 µm Schleifpapier (3M 281Q wetordry TMproductionTM), unter anschließender Bestimmung des prozentualen relativen Restglanzes bei 20° mit einem handelsüblichen Glanzgerät (Fa. Byk Gardner) bestimmt.

### Steinschlagbeständigkeit mittels Multischlag:

Steinschlagprüfgerät Fa. Erichsen Typ 508 gem. DIN 55996-1 Klebeband Tesa 4657 grau Fa. Beiersdorf AG. Die Klebekraft muss 4,0 N/cm ±0,5N/cm betragen.

Die Prüfung wird nach DIN 55996-2 durchgeführt.

Der zur Prüfung verwendete Druck beträgt 2 bar. Sollten anhand von Abgleichsprüfungen Druckabweichungen notwendig sein darf dieser um ± 0,5 bar verändert werden. Verwendet werden 2 x 500 g Strahlmittel. Die Geschwindigkeit muss so eingestellt werden, dass 500 g Strahlmittel in 10 Sekunden gefördert werden. 5 kg Strahlmittel sind nach 1000 Durchgängen auszutauschen. Nach dem Beschuss werden lose anhaftende Lackteilchen mit dem Klebeband 4657 entfernt. Die Benotung erfolgt nach den Bildern (DIN 55996-1).

Die Tests ergaben folgende Eigenschaften:

| | Referenzbeispiel | Beispiel 2.1 | Beispiel 2.2 | Beispiel 2.3 |
|---|---|---|---|---|
| Haftung: | GT1 | GT1 | GT1 | GT0 |
| Kratzfeständigkeit %Restglanz | 65% | 90% | 95% | 80% |
| Steinschlagtest | | | | |
| Note | 2 | 2 | 2 | 1 |
| Gesamtschaden [%] | 15 | 15 | 10 | 10 |

Im nachfolgenden wird ein Verfahren zur Herstellung einer erfindungsgemäßen Bautenschutzlackierung beschrieben, die bei Raum- bzw. üblicher Umgebungstemperatur (5 bis 25°C) getrocknet werden kann.

### Beispiel 3 wasserbasierte Metallpartikelbeschichtung ohne Füllstoff

Zu 100 g 3-Glycidyloxypropyltriethoxysilan wurden 20 g eines in 2-Butanol gelösten mit organischen Liganden stabilisierten Aluminiumkomplexes (x-add® KR 9006, Fa. NANO-X GmbH) zügig zugegeben und ca. 5 min gerührt, so dass eine wasserklare Lösung entstand. Zu dem Ansatz wurden 400 g Kieselsol Klebosol 30 CAL 25 gegeben und ca. 5 h kräftig gerührt. Es entstand eine weißliche niedrigviskose Lösung. Zu dieser wurden 25 g einer pyrogenen Kieselsäure (z.B. Cab-O-Sil® EH5, Fa. Cabot) gegeben und 2 h mit einem Dissolver eindispergiert. Danach wurden zu dem Ansatz 250 g plättchenförmige Zinkflakes mit einem Durchmesser von 10-20 µm sowie 25 g plättchenförmiges Aluminiumpigment mit einem Teilchendurchmesser von 10-20 µm sowie 200 ml destilliertes Wasser und 3 g Emulgator (Marlipal® 24/60, Fa. Sasol) gegeben, mit einem Propellerrührer 4 h eingerührt und noch 12 h nachgerührt.

Stahlbleche wurden mit 240er Schleifpapier angeschliffen und mit Druckluft abgeblasen. Die in den Beispielen 1 und 3 hergestellten metallpartikelhaltigen Korrosionsschutzunterschichten wurden auf die vorbereiten Stahlbleche aufgesprüht und 120 min bei Umgebungstemperatur (25°C) getrocknet. Die erhaltenen Muster mit einer Trockenschichtdicke von 10 µm wiesen eine glatte silbrig-homogene Optik auf. Danach wurde ein weiß pigmentiertes Deckschichtsystem mit einer Trockenschichtdicke von ca. 50 µm aufgesprüht.

Die Zusammensetzung der Formulierung war wie folgt:
105 g x-bond U 9068 (SiliXan-Bindemittel mit 100% Feststoffanteil) NANO-X GmbH
105 g 1-Methoxy-2-Propanol (Solvadis)
0,2 g Byk 301 (Byk Chemie)
4,4 g TINUVIN 400 (BASF AG)
3,1 g TINUVIN 152 (BASF AG)
21,8 g einer Mischung aus 17,8 g Helio Beit UN 101 Pigment weiß (Bollig & Kemper) und
22,2 g n-Butanol (Solvadis)
14,4 g einer Mischung aus 10 g x-add KR 9006 (NANO-X GmbH) und 10 g n-Butanol (Solvadis)

Die Trocknung erfolgte im Umlufttrockenschrank bei 180°C für 15 min.

### Beispiel 4: Korrosionsschutzbeschichtung auf Stahl

Eine Prüfplatte aus 22MnB5 Stahl wurde mit einem alkalischen Reiniger vom Typ Alsar 25/7 (Fa. Alsar) im Ultraschallbad vorgereinigt und mit einen Zinklack vom Typ x-tec^{®} CO 4036 (NANO-X GmbH) durch Sprühen beschichtet und bei Raumtemperatur über 48 h getrocknet. Die Trockenschichtdicke lag bei ca. 10 µm. Danach erfolgte die Applikation eines SiliXan^{®} Topcoats mit folgender Zusammensetzung durch Sprühen mit einer Schichtdicke von ca. 25-30 µm mit einer anschließenden Trocknung bei Raumtemperatur für ca. 48 h:
- 70 g: x-bond^{®} U 9068 (NANO-X GmbH)
- 30 g: Xylol
- 10 g: x-add^{®} KR 9006 (NANO-X GmbH)

Die Schichteigenschaften der Prüfplatte wurden wie folgt geprüft:

### Chemikalienbeständigkeit:

Als Prüfmittel wurden folgende Chemikalien getestet:
F elgenreiniger vom Typ "Aluminiumteufel" (Fa. Tuga)
F elgenreiniger vom Typ Sineo (Fa. Seneo)

Nach Einwirkung von 1 h und 24 h der o.g. Reiniger zeigte sich kein Angriff der Chemikalien auf der Oberfläche.

### Korrosionsschutz:

Die Korrosionseigenschaften wurden mittels neutralem Salzsprühnebeltest nach DIN EC ISO 9227 geprüft und zeigte eine Beständigkeit von über 700 h.

## Patentansprüche

1. Lackaufbau, umfassend eine metallpartikelhaltige Korrosionsschutzunterschicht und eine Deckschicht, die durch Aushärten eines bindemittelhaltigen Beschichtungsmittel erhältlich ist, wobei das Bindemittel der Deckschicht mindestens ein Silan (A) mit mindestens zwei -Si(OR)₃₋ₙ-Gruppen enthält, worin n 0 oder 1 ist und R unabhängig voneinander eine C₁₋₅-Alkylgruppe darstellt, und das Silan (A) durch Reaktion eines organischen Moleküls mit zwei oder mehr reaktiven funktionellen Gruppen, ausgewählt aus Amino-, Epoxy-, Mercaptan-, Carbonsäure-, Anhydrid-, Oxim-, Isocyanato- und Thioisocyanatogruppen, mit einem oder mehreren Silanen (B) mit einer organischen Seitenkette, die eine oder mehrere funktionelle Gruppen enthält, die mit den reaktiven funktionellen Gruppen des organischen Moleküls reagieren können, erhältlich ist.

2. Lackaufbau gemäß Anspruch 1, worin die Metallpartikel ausgewählt sind aus der Gruppe, bestehend aus Zink, Aluminium, Zinn, Eisen, Mangan, Magnesium, Kupfer, Nickel, Chrom, Molybdän und Mischungen oder Legierungen hieraus.

3. Lackaufbau gemäß Anspruch 1 oder 2, worin die Korrosionsschutzunterschicht zusätzlich ein Metalloxid, ausgewählt aus der Gruppe, bestehend aus Titanoxid, Zirkoniumoxid, Aluminiumoxid und Zinnoxid, enthält.

4. Lackaufbau gemäß einem der vorhergehenden Ansprüche, worin die Korrosionsschutzunterschicht zusätzlich ein Bindemittel enthält, das bevorzugt durch Aushärten eines Beschichtungsmittels erhältlich ist, das epoxymodifizierte Siliciumoxidpartikel enthält.

5. Lackaufbau gemäß Anspruch 4, worin die epoxymodifizierten Siliciumoxidpartikel durch Kondensation von epoxymodifiziertem Alkoxysilan erhältlich sind, wobei das epoxymodifizierte Alkoxysilan bevorzugt folgende allgemeine Formel aufweist:
R¹R²ₘSi(OR)₃₋ₘ
worin m 0, 1 oder 2, vorzugsweise 0 oder 1 ist,
R¹ eine epoxyfunktionelle Gruppe ist,
R² Wasserstoff oder ein beliebiger organischer Rest, wie beispielsweise C₁₋₅-Alkyl, Aryl, Amino-C₁₋₅-alkyl, Cyclohexyl oder Vinyl ist, und
RO C₁₋₅-Alkoxy ist.

6. Lackaufbau gemäß einem der vorhergehenden Ansprüche, worin das zur Herstellung des Silans (A) eingesetzte organische Molekül ein Diol oder Polyol ist und das hiermit umgesetzte Silan (B) eine Isocyanatogruppe enthält.

7. Lackaufbau gemäß einem der vorhergehenden Ansprüche, worin das Silan (A) des Bindemittels der Deckschicht vor dem Aushärten des Beschichtungsmittels maximal zu 5 %, bevorzugt maximal zu 1 % und besonders bevorzugt nicht anorganisch vorvernetzt ist.

8. Lackaufbau gemäß einem der vorhergehenden Ansprüche, worin das Silan (A) des Bindemittels der Deckschicht außer den OR-Gruppen keine reaktiven organischen funktionellen Gruppen enthält.

9. Lackaufbau gemäß einem der vorhergehenden Ansprüche, zusätzlich umfassend eine Zwischenschicht, die ein Bindemittel enthält, das durch Aushärten eines Beschichtungsmittels erhältlich ist, das epoxymodifizierte Siliciumoxidpartikel enthält, worin die epoxymodifizierten Siliciumoxidpartikel bevorzugt wie in Anspruch 5 definiert sind.

10. Lackaufbau gemäß einem der vorhergehenden Ansprüche, worin die Deckschicht und/oder Zwischenschicht Effekt- und/oder Farbpigmente enthält.

11. Lackaufbau gemäß einem der vorhergehenden Ansprüche, wobei es sich bei der Deckschicht um eine Klarlackschicht handelt.

12. Verfahren zur Herstellung eines Lackaufbaus nach einem der vorhergehenden Ansprüche, worin ein metallpartikelhaltiges Beschichtungsmittel auf ein Substrat aufgebracht und gegebenenfalls zumindest teilweise ausgehärtet wird und auf diese Schicht gegebenenfalls nach Aufbringen und gegebenenfalls Aushärten einer Zwischenschicht das Beschichtungsmittel der Deckschicht aufgebracht und gehärtet wird.

13. Verfahren gemäß Anspruch 12, worin das Substrat ausgewählt ist aus der Gruppe bestehend aus Metall, Kunststoff, Keramik, Lack, Gewebe, Textilien, Naturstoffen, Glas, mineralischen Substanzen und Verbundmaterialien.

14. Verfahren gemäß einem der Ansprüche 12 oder 13, worin das Aushärten bei Temperaturen von Raumtemperatur bis 1200°C, vorzugsweise von Raumtemperatur bis 250°C, besonders bevorzugt von Raumtemperatur bis 100°C erfolgt.

15. Verwendung eines Lackaufbaus gemäß einem der Ansprüche 1-11 als Fahrzeuglack, Schiffslack, Bautenschutz- oder Industrielack.
